Europäisches Patentamt

European Patent Office

Office européen des brevets

(19)

(11) Publication number: 0 199 045

A2

(12) **EUROPEAN PATENT APPLICATION**

(21) Application number: 86103170.6

(22) Date of filing: 10.03.86

(51) Int. Cl.4: **B65G 47/26**

(30) Priority: 26.03.85 IT 5317385 U

(43) Date of publication of application:
29.10.86 Bulletin 86/44

(84) Designated Contracting States:
AT BE CH DE FR GB LI LU NL SE

(71) Applicant: **O.C.I. S.p.A.**
**Via Gian Battista Vico, 2**
**I-10128 Torino(IT)**

(72) Inventor: **Moriconi, Marcello**
**Via G. Servais 200/39/A**
**I-10100 Torino(IT)**

(74) Representative: **Bongiovanni, Guido et al**
**c/o Ingg. Carlo e Mario Torta Via Viotti 9**
**I-10121 Torino(IT)**

(54) Driven-roller conveyor with magnetic clutching.

(57) A driven-roller conveyor is described in which each roller receives drive from common transmission means through a device provided with a pair of annular elements facing one another but not mechanically connected, at least one of which carries a magnet and the other of which is at least in part constructed of material capable of interacting magnetically with the magnet in such a way as to allow the transmission of drive between the two elements by magnetic attraction/repulsion phenomena until a resistant couple greater than a predetermined value acts on the rollers.

EP 0 199 045 A2

Fig.1

## DRIVEN-ROLLER CONVEYOR WITH MAGNETIC CLUTCHING

The present invention relates to a driven-roller conveyor capable of accumulating conveyed items by stopping the rollers underlying the items during the accumulation phase, these being held stationary by a suitable device, incorporating a transmission device of magnetic type.

It is known to effect accumulation of items conveyed on driven-roller conveyors by utilising mechanical clutches inserted in the drive train which transmits movement to the individual rollers starting from one or more common motors; mechanical clutches of industrial conveyors are, however, subjected to relatively high loads, and therefore wear rapidly; moreover, these also have a relatively great constructional complexity and a relatively high cost.

The object of the invention is that of providing a driven roller industrial conveyor capable of allowing the accumulation of conveyed items whilst having a relatively low cost and reduced wear.

The said object is achieved by the invention in that it relates to a driven-roller conveyor of the type comprising a plurality of adjacently disposed rollers rotatable about their axes, and common transmission means operable to actuate the said rotatable rollers for simultaneously supporting and advancing a plurality of items along the said conveyor, characterised by the fact that it includes, for each of the said rollers, a corresponding transmission device operable to transfer the drive from the said common transmission means to the respective roller, the said device including a pair of facing annular elements which are not mechanically connected to one another and which are located at a predetermined relatively small distance, and coupling means for connecting the first of the said annular elements for rotation with a respective said roller and a second of the said annular elements for rotation with the said common transmission means, at least one of the said annular elements including a magnet and the other being made, at least in part, of a substance able to interact magnetically with the said magnet in such a way as to cause mutual magnetic coupling of the said facing annular elements with consequent linking of magnetic fields of these and transmission of drive from one to the other in consequence of attraction/repulsion phenomena of respective poles, unless the said rollers are acted on by a resistant couple greater than a predetermined value.

For a better understanding of the invention there is now given a non-limitative description of some embodiments, with reference to the attached drawings, in which:

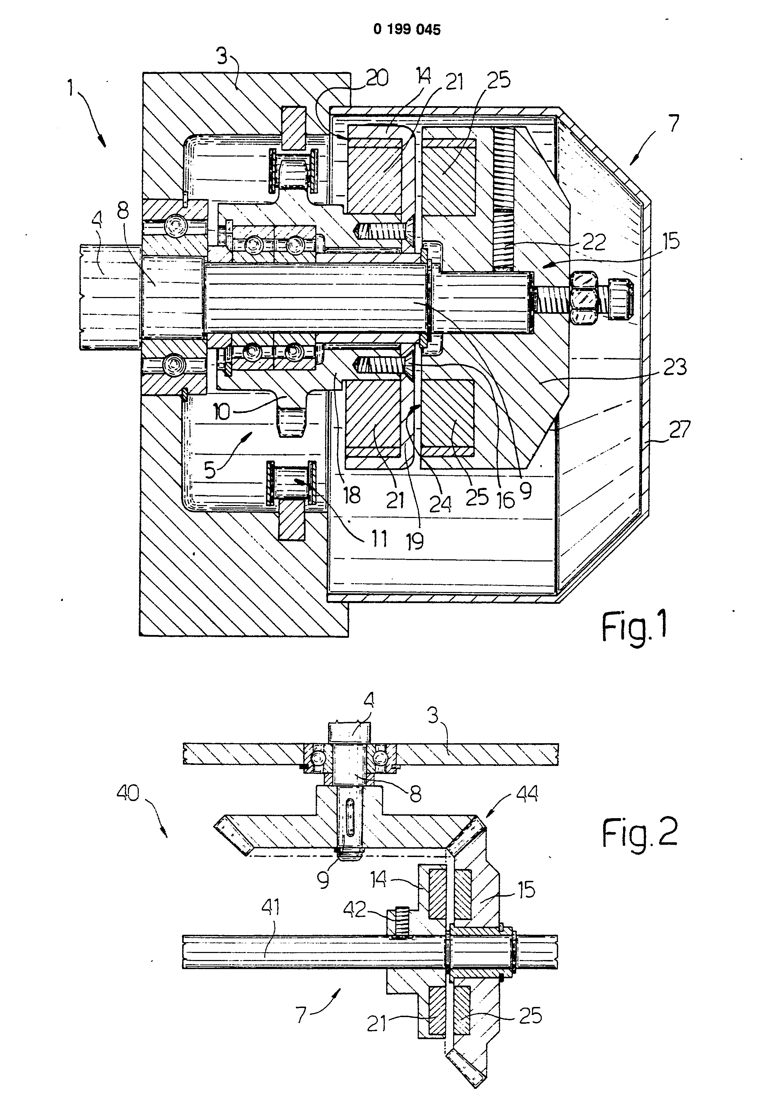

Figure 1 illustrates a detail of a conveyor formed according to the invention;

Figures from 2 to 5 illustrate the same detail as in Figure 1 showing several possible variants of the conveyor of the invention; and

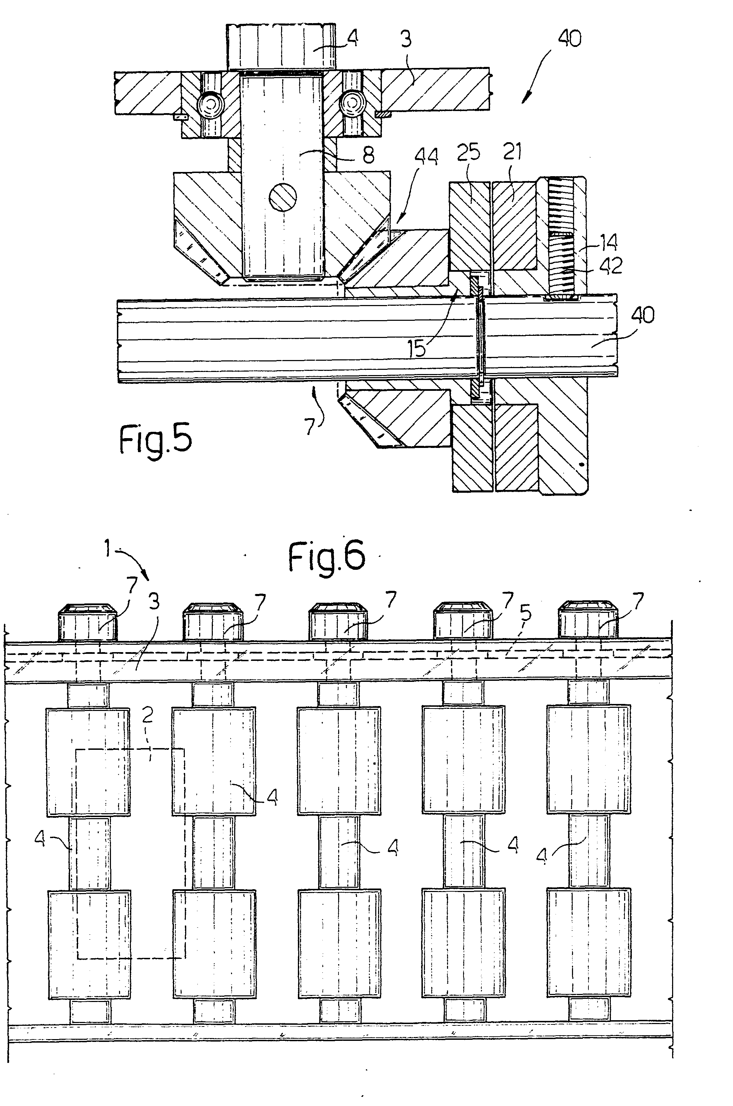

Figure 6 is a plan view from the above of the embodiment of the conveyor according to Figure 1.

With reference to Figures 1 and 6, a horizontal industrial conveyor for items 2 is generally indicated 1 and comprises a supporting base 3 of known type, a plurality of a known type of driven rollers 4, which are cylindrical and adjacently mounted, and rotatable about their axes with respect to the base 3, and operable simultaneously to support and advance items 2 along the conveyor 1, and common transmission means 5, only shown schematically in Figure 6, operable to drive the rollers 4 by transmitting to them the rotational movement imparted by one or more common motors which, again, are known and not illustrated for simplicity. Respective transmission devices 7, one for each roller 4, disposed coaxially with the rollers 4 themselves, take drive from the common drive means 5 and directly actuate the corresponding rollers 4 independently of one another so that there is the possibility, in order to effect accumulation of several items 2 in a determined position in a known way, to guarantee the possibility of stopping of the rollers 4 underlying the items under accumulation with respect to the other rollers 4 which must, however, be able to continue to rotate at a constant velocity.

In a preferred embodiment, the rollers 4 are freely mounted on the frame 3 by respective end support pins 8, on lateral ends 9 projecting from which there are freely carried, on at least one side of the rollers 4, respective toothed wheels 10 forming part of the common transmission means 5, which mesh with a respective roller chain 11, of known type, driven in a known way, not illustrated for simplicity, by the said common motors, in such a way as to drive the toothed wheels 10 to rotate at a constant velocity. The drive between the toothed wheels 10 and the respective rollers 4 is transmitted through the pins 8 by means of the device 7 of each roller 4; according to the invention, this comprises a pair of facing annular elements 14 and 15 which are not mechanically connected to one another and which are separated by a predetermined relatively small distance, for example, a few centimetres, and rigidly connected for rotation, the first with the wheel 10 and the second with the free end of the corresponding end 9 carrying the wheel 10. In particular, the element 14 is rigidly carried, by means of screws 16, by a hub 18 projecting from the corresponding wheel 10, and includes a disc 9 of sheet metal formed as a cup, provided on one face 20 with one or more magnets 21, disposed radially in a ring, whilst the element 15 is directly rigidly fixed to the end 9 of the pin 8 by means of a clamping screw 22 and includes a disc 23 in the form of a flywheel, provided on one face 24 with one or more magnets 25 similar to the magnets 21; a cap 27 completes and protects the device 7.

Preferably the magnets 21 and 25 are permanent and, rather than being formed by a plurality of bi-polar elements disposed in a ring, are constituted by two respective permanent magnets of commercial type having six poles; and entirely equivalently, according to the present invention, one or both of the magnets 21 and 25 can be replaced by electromagnets of equal strength, of known type and not illustrated for simplicity, suitably fed for example through brushes carried by the cap 27, or the magnets of one of the elements 14 or 15 may be replaced with a ring made of ferromagnetic material in such a way that at least part of one of the elements 14,15 is made of a material capable of interacting magnetically with the magnet 21 or 25 (permanent or otherwise) of the other annular element facing it, in such a way as to cause mutual magnetic coupling of the elements 14 and 15 with consequent linking of the respective magnetic fields of these and transmission, by known physical laws, of movement between the elements 14 and 15 which are mechanically unconnected, in consequence of the attraction and/or repulsion phenomena of the respective poles; in fact, if only one of the elements 14 and 15 is provided with a magnet and the other is made at least in part of ferromagnetic material, this latter becomes in turn a magnet by induction.

The function of the conveyor 1 equipped with devices 7 according to the invention is evident; thanks to the facing positioning of the magnets 12 and 25 in such a way as to obtain the maximum mutual linking of the associated magnetic fields, when the element 14 is driven to rotate by the drive train 11 it also draws the element 15 into rotation by magnetic attraction and consequently causes the associated roller 4 to rotate; the couple which it is possible to transmit between the elements 14 and 15 depends on the dimensions of the magnets 21 and 25 (if they are permanent magnets) and on their mutual separation, or rather on the intensity of the magnetic field vector linking the elements 14 and 15; its value can thus be easily calculated by those skilled in the art and the elements 14 and 15 dimensioned in such a way that items 2 of widely differing dimensions and weights can be moved. To effect accumulation of items 2 it is sufficient to stop the advancement thereof in a known way with an end stop; in this way the resistant couple on the roller 4 underlying the items 2 under accumulation increases until it exceeds the above stated maximum couple which can be transmitted between the magnets 21 and 25. At this point, there not being, according to the invention, any mechanical connection between the elements 14 and 15, the element 14 can no longer draw the element 15 at the same speed, but is free to rotate undisturbed without producing any overload on the common transmission 5, whilst the element 15 under the effect of the resistant couple to which the associated roller 4 is subjected, slows, thus obtaining the desired sliding of the roller 4 underlying the items 2 under accumulation without the use of any mechanical clutches and therefore substantially without any wear of the components of the apparatus of the conveyor 1.

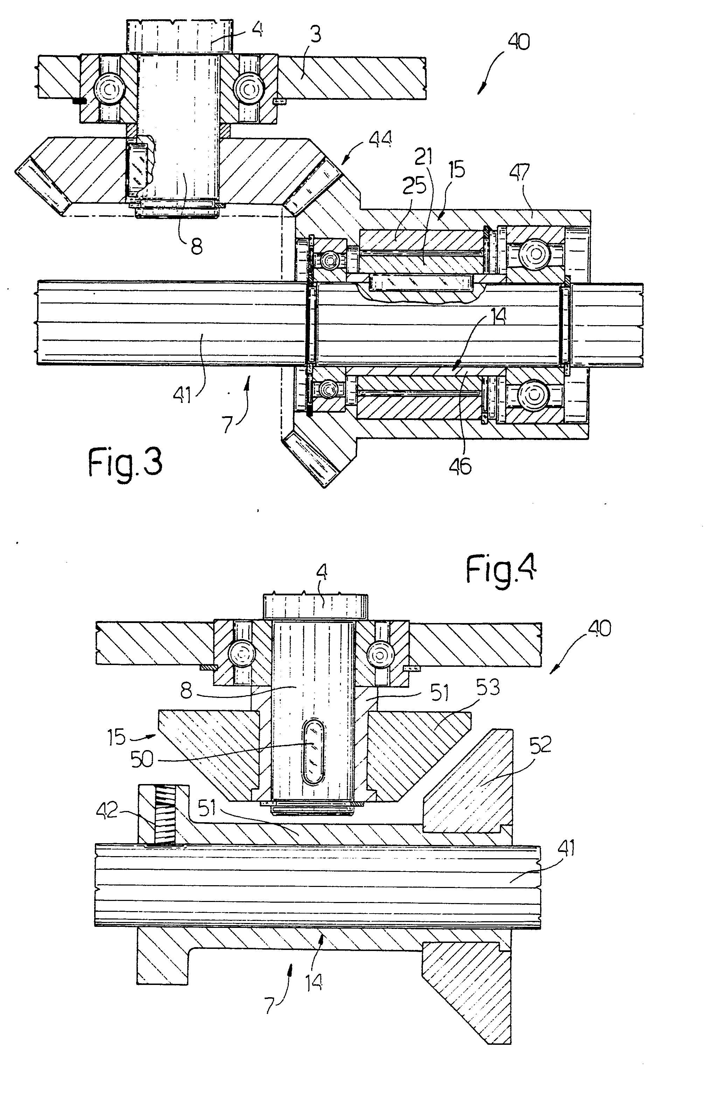

In Figures from 2 to 5 are illustrated several possible variations over that described up to now; the similar or identical details to those described are indicated for simplicity with the same reference numerals. In particular, the variants of Figures from 2 to 5 relate to a conveyor 40 in which the common means 5 comprise a rotating shaft 41 disposed with its axis perpendicular to that of the rollers 4 and carrying for rotation, for example by means of screws 42, all the elements 14 of each device 7 of the rollers 4; on the common shaft 41 which receives drive in a known manner from the said common motor, there are, likewise freely mounted, as in the embodiments of Figures 2, 3 and 5, also all the elements 15 and these latter are connected for rotation with the associated rollers 4 by bevel gear couplings 44 of known type secured to the pins 8 of the rollers 4 at the position of the wheels 10. In particular, according to the example of Figure 3, the elements 14 and 15, instead of being formed by facing discs, are constituted by two concentric sleeves 46 and 47 provided laterally with a plurality of permanent magnets 21 and 25 disposed longitudinally in a ring; with such arrangement the maximum magnetic flux linkage is obtained and therefore higher couples can be transmitted. In the variant of Figure 4, on the other hand, the devices 7 do not have bevel gear coupling, but rather the elements 14 and 15 are carried, the first rigidly on the shaft 41 together with all the other elements 14 of the other devices 7, and the second rigidly on the associated wheel 4, fixed to the associated pin 8, for example, with a key 50. The elements 14 and 15 comprise respective sleeves 51 at or adjacent ends of which there are fixed, in respective rings, permanent magnets 52 and 53 of frustoconical conformation; in this way transmission between orthogonal axes is ensured without bevel gears, even if the magnetic coupling is not optimal and therefore the transmissible couple is low.

From what has been described the advantages associated with the conveyor according to the invention will be clear and it will also be clear that variations and modifications can be introduced thereto without departing from the scope of the present invention.

**Claims**

1.A driven-roller conveyor of the type comprising a plurality of rollers disposed adjacent one another and rotatable about their axis and common transmission means operable to drive the said rotatable rollers for simultaneously supporting and advancing a plurality of items along the said conveyor, characterised by the fact that it comprises, for each of the said rollers, a corresponding transmission device operable to transfer drive from the said common transmission means to the associated roller, the said device comprising a pair of facing annular elements which are not mechanically connected to one another and which are located at a predetermined relatively small distance from one another, and coupling means for connecting a first of the said annular elements for rotation with the associated said roller and a second of the said annular elements for rotation with the said common transmission means, at least one of the said annular elements including a magnet and the other being made at least in part of a substance able to interact magnetically with the said magnet in such a way as to cause mutual magnetic coupling of the said facing annular elements with consequent magnetic flux linkage of these and transmission of drive from one to the other as a consequence of attraction/repulsion phenomena of the associated poles unless a resistant couple greater than a predetermined value acts on the said rollers.

2.A conveyor according to Claim 1, characterised by the fact that the said annular elements each comprise an associated six-pole permanent magnet, the said magnets being disposed in such a way as to obtain the maximum mutual linkage of the associated magnetic fields.

3.A conveyor according to Claim 1 or Claim 2, characterised by the fact that at least one of the said annular elements includes an electromagnet.

4.A conveyor according to Claim 1, characterised by the fact that the said facing annular elements are constituted by two concentric sleeves which are provided laterally with a plurality of longitudinally disposed magnets in a ring.

5.A conveyor according to Claim 1, characterised by the fact that the said facing annular elements are constituted by discs provided on respective faces with a plurality of radially disposed magnets in a ring.

6.A conveyor according to Claim 1, characterised by the fact that the said common transmission means include a roller chain meshing with a plurality of gear wheels each carried freely rotatably on a respective support pin of a respective said roller, the said first annular element of each said device being carried for rotation with a hub projecting from the respective said gear wheel and the respective second annular element being directly fixed rigidly on a projecting end of the said support pin.

7.A conveyor according to Claim 1, characterised by the fact that the said common transmission means comprise a rotatable shaft disposed with its axis perpendicular to that of the said rollers and carrying all the said second annular elements of the said transmission device for rotation therewith.

8.A conveyor according to Claim 7, characterised by the fact that the said shaft carries all the said first annular elements of the said devices freely rotatably adjacent the said second annular elements, these former further including respective bevel gear couplings connecting the said first annular elements for rotation with respective support pins of the said rollers.

Fig.1

Fig.2

Fig.3

Fig.4

Fig.5

Fig.6